# FASCICULE DE BREVET EUROPEEN

(11) **EP 1 055 459 B1**
(45) Date de publication et mention de la délivrance du brevet: **12.01.2005**
(21) Numéro de dépôt: 99420121.8
(22) Date de dépôt: 20.05.1999
(51) Int. Cl.: B02C 18/22

(54) **Dispsitif d'introduction forcée de pièces plastique ou de déchets de toutes dimentions dans toutes types de machines à broyer**
Gezwungene Speisevorrichtung für Kunststoffteilen oder Abfall aller Grössen in Zerkleinerungsvorrichtungen aller Art
Device for force feeding of plastic parts or waste elements of different sizes into all kinds of crushing machines

(43) Date de publication de la demande: 29.11.2000
(73) Titulaire: MANIPULATION PLASTIQUE-MODITEC, 69970 Marennes (FR)
(72) Inventeur: Diaz, Richard, 69001 Lyon (FR)
(74) Mandataire: Vuillermoz, Bruno

(56) Documents cités:
- EP-A- 0 285 011
- DE-A- 2 615 178
- DE-A- 3 930 041
- DE-U- 9 104 544
- DE-U- 9 314 361
- FR-A- 2 427 845
- US-A- 4 161 296
- US-A- 4 580 733

## Description

La présente invention concerne un broyeur avec un dispositif destiné à forcer l'alimentation de pièces plastiques ou de déchets de toutes dimensions, en vue de leur recyclage. L'invention visant à permettre l'introduction des pièces encombrantes dans de petits broyeurs, pour permettre un recyclage immédiat de la matière plastique.

Le broyage de telles pièces, notamment dans le domaine de l'injection plastique, est traditionnellement fait dans des broyeurs ayant des dimensions de chambres de coupe supérieures à celles des pièces à broyer, afin qu'il n'y ait pas de blocage dans le tunnel d'introduction, ni de stagnation des pièces ne pouvant être happées par le rotor, ni d'intervention humaine dangereuse pour pousser les pièces. Ces broyeurs (dit centralisés) sont en conséquence surdimensionnés et très encombrants, bruyants, chers, consommateurs d'énergie, longs à nettoyer et ne peuvent pas être placés directement à côté des presses à injecter (en pied de presse). En outre, ces broyeurs nécessitent un local indépendant, d'où une manipulation et un stockage des pièces à recycler et un traitement ultérieur de dessiccation des matériaux broyés, obligatoire après ces transferts. Un tel outil a par exemple été décrit dans le document DE-U-9104544.

Le besoin économique de recycler immédiatement la matière des pièces plastiques mauvaises ou des déchets, nécessite des broyeurs compacts pouvant être placés à côté des presses à injecter, raccordés directement aux systèmes d'alimentation en matière recyclée ce qui évite les transferts, et acceptant de broyer de multiples formes de pièces sans intervention de l'opérateur. L'entrée en tunnel d'introduction doit donc être très grande, mais le broyeur et sa chambre de coupe doivent rester d'une taille minimum.

Le dispositif selon l'invention répond à ces besoins. Sa caractéristique principale est de forcer l'introduction des pièces, ou des déchets de toutes dimensions, vers la chambre de coupe du broyeur, d'où une réduction de la taille du broyeur. L'introduction se fait à l'aide d'un ou plusieurs crochets de forme spécialement adaptée, montés sur un arbre en rotation à l'intérieur du tunnel (ou entonnoir) d'introduction du broyeur. Ce ou ces crochets disposés à intervalles prédéfinis accrochent les pièces tombant par gravité, et les force à descendre dans la chambre de coupe du rotor de broyage situé en dessous, qui peut alors en détacher des particules. Une alternance dans le sens de rotation de l'arbre des crochets provoque successivement l'enroulement et le déroulement des pièces d'autour des crochets. Une seconde caractéristique est de déplacer les pièces en stagnation, par les mouvements provoqués, ce qui évite les blocages et les interventions humaines dangereuses.

Selon des modes particuliers de réalisation:
- Les crochets peuvent avoir des dents de coupe sur leur contours pour accrocher les pièces ou les prédécouper.
- L'arbre peut ne pas traverser totalement le tunnel.
- Les crochets peuvent être en forme de came pour ne pas provoquer l'enroulement des pièces autour de l'arbre.
- L'arbre et les crochets peuvent être fait dans la même pièce.
- L'arbre peut être un arbre cannelé permettant un décalage angulaire de plusieurs crochets.
- Les entretoises entre les crochets peuvent être munies de dents multiples.
- Le dispositif selon l'invention est associé à deux plusieurs rotors de broyage équipés ou non de couteaux concasseurs montés en alternance avec des rouleaux dentés de granulation.
- Le dispositif selon l'invention est associé à deux plusieurs rotors, chaque crochet étant monté de façon à s'entrecroiser avec les rotors de broyage, dans des gorges prévues à cet effet.
- La motorisation de l'arbre et sa charge peuvent être contrôlés et gérés par un automate programmable en relation avec la charge du ou des rotors du broyeur, de façon à contrôler automatiquement par arrêt de l'arbre l'alimentation en pièces du broyeur et donc sa charge.
- La rotation de l'arbre (2) peut être synchronisée avec la rotation du ou des rotors du broyeur, pour en augmenter l'efficacité.

Les dessins annexés illustrent l'invention:
La figure 1 représente en coupe, le dispositif de l'invention.
La figure 2 représente en vue de face, un crochet.
La figure 3 représente en vue de face, l'invention associée à deux rotors de broyage.
La figure 4 représente en vue de face, l'invention associée à deux rotors de broyage selon une disposition entrecoisée.
La figure 5 représente en vue de face, une variante de la forme des crochets.

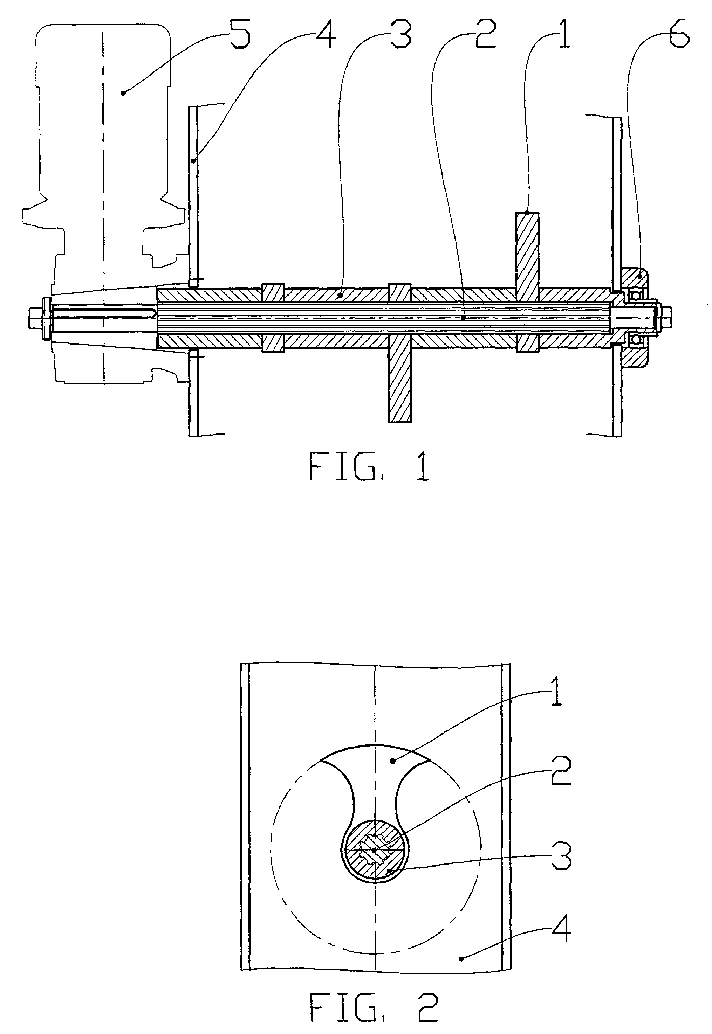

En référence à ces dessins, fig. 1 et 2, un arbre cannelé (2), est entraîné en rotation par un moyen quelconque (5) (par exemple un motoréducteur). Cet arbre (2) entraîne en rotation un ou plusieurs crochets (1) de forme symétrique. L'écartement entre ce ou ces crochets se fait à l'aide d'entretoise (3). Les crochets sont angulairement décalés sur l'arbre cannelé s'ils sont plusieurs. L'ensemble est monté sur paliers (6) à travers le tunnel d'introduction (4) du broyeur, tunnel qui peut être en forme d'entonnoir. L'ensemble se situe au dessus de la chambre de coupe du broyeur de manière parallèle au rotor du broyeur.

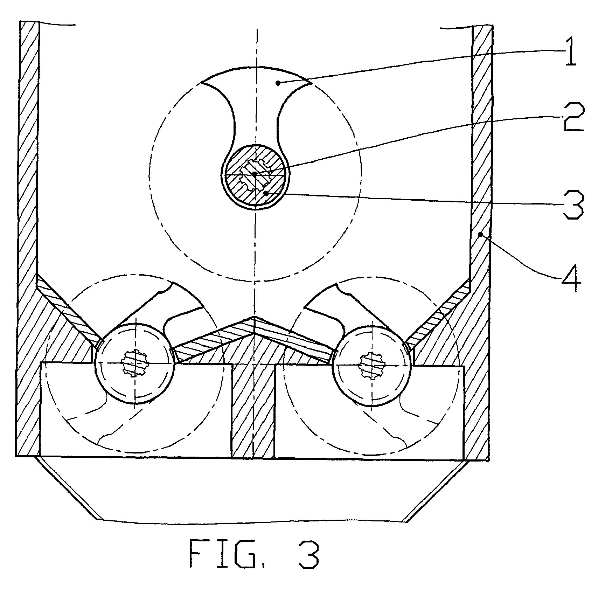

Une variante fig. 3 associe le dispositif à deux rotors de broyage.

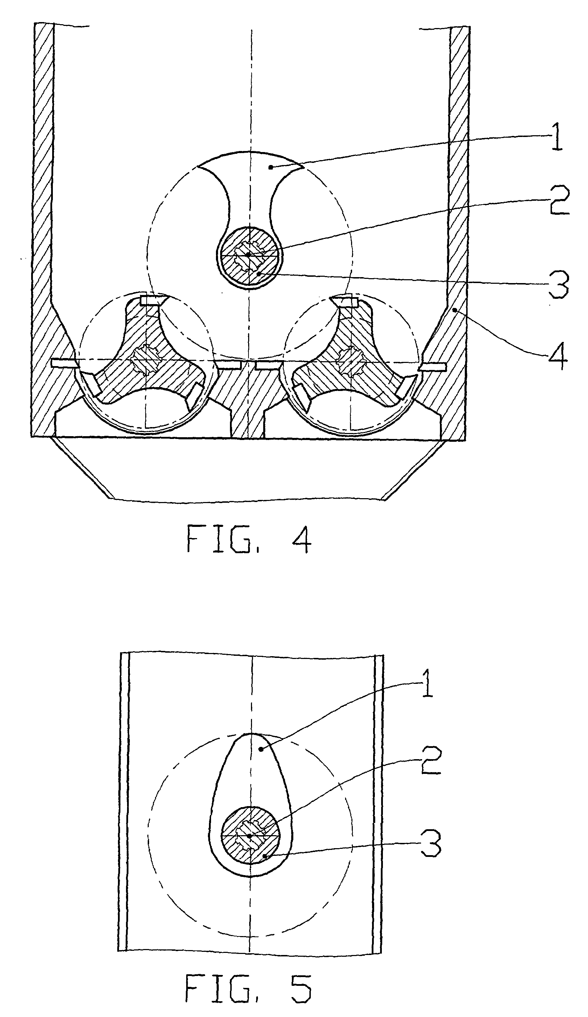

Une variante fig. 4 associe le dispositif à deux rotors de broyage de manières à ce qu'ils s'entrecroisent sans se toucher.

Une variante fig. 5 montre une autre forme des crochets (2) qui deviennent alors en forme de came.

Une variante non illustrée consiste à piloter la motorisation (5) de l'arbre (2) à l'aide d'un automate programmable.

Le dispositif selon l'invention est en particulier monté sur un broyeur compactes destinés au recyclage des pièces plastiques de grandes dimensions, ou des déchets d'injection tels que les 5 carottes, de façon dite en pied de presse à injecter, pour permettre un recyclage immédiat de la matière plastique.

## Revendications

1. Dispositif de broyage avec dispositif d'introduction forcée de pièces plastiques ou de déchets, de toutes dimensions, comprenant, au sein d'une enceinte communiquant avec ladite machine à broyer par le biais d'un tunnel d'introduction (4), un arbre (2) entraîné en rotation de manière alternée, muni d'un ou de plusieurs crochets radiaux (1) disposés à intervalles au moyen d'entretoises (3), et destinés à accrocher les pièces ou déchets tombant par gravité dans ladite enceinte, pour les forcer à descendre dans une chambre de coupe, ***caractérisé* en ce que** ladite chambre de coupe comporte deux rotors de broyage équipés d'une part de rouleaux dentés de granulation aptes à assurer la granulation des pièces plastiques ou déchets, et d'autre part de couteaux concasseurs montés en alternance avec lesdits rouleaux dentés de granulation, l'axe de rotation desdits rotors de broyage étant positionnés parallèlement à l'axe de rotation de l'arbre (2) et dans un plan sensiblement horizontal, ledit plan qui s'étend entre les axes de rotation desdit rotors étant situé en dessous de l'axe de rotation de l'arbre (2) et l'axe de symmetrie dudit plan s'étendant à travers l'axe de l'arbre (2).

2. Dispositif selon la revendication 1, **caractérisé en ce que** chaque crochet (1) de l'arbre (2) est monté de façon à s'entrecroiser avec les rotors de broyage dans des gorges prévues à cet effet.

3. Dispositif selon revendication 1, **caractérisé en ce que** les crochets (1) ont des dents de coupe sur leur contour.

4. Dispositif selon revendication 1, **caractérisé en ce que** l'arbre (2) ne traverse pas totalement le tunnel (4).

5. Dispositif selon revendication 1, **caractérisé en ce que** les crochets (1) ont une forme de came.

6. Dispositif selon revendication 1, **caractérisé en ce que** l'arbre (2) et les crochets (1) sont monoblocs.

7. Dispositif selon revendication 1, **caractérisé en ce que** l'arbre (2) est un arbre cannelé.

8. Dispositif selon revendication 1, **caractérisé en ce que** les entretoises (3) entre les crochets (1), sont munies de dents multiples.

9. Dispositif selon revendication 1, **caractérisé en ce que**, dans un plan perpendiculaire aux axes de rotation de l'arbre (2) et des deux rotors de broyage, la projection de la trajectoire des crochets (1) de l'arbre (2) coupe la projection de la trajectoire des organes aptes à assurer la granulation au niveau des deux rotors de broyage.

10. Dispositif selon revendication 1, **caractérisé en ce que** les rotors de broyage tournent dans des sens de rotation opposés.

11. Dispositif selon revendication 1, **caractérisé en ce que** l'arbre (2) et sa charge sont contrôlés et gérés par un automate programmable en relation avec la charge des deux rotors de broyage.

12. Dispositif selon revendication 1, **caractérisé en ce que** la rotation de l'arbre (2) est synchronisée avec la rotation des deux rotors de broyage.

## Claims

1. Crushing device, with a device for the forced introduction of plastic pieces or of waste of all dimensions, comprising, within a containment communicating with the said crushing machine by means of an introduction tunnel (4), a shaft (2) driven in alternating rotation and equipped with one or more radial hooks (1) which are arranged at intervals by means of spacers (3) and are intended for catching the pieces or waste falling into the said containment due to gravity, in order to force them to descend into a cutting chamber, **characterized in that** the said cutting chamber comprises two crushing rotors equipped, on the one hand, with toothed granulation rollers capable of effecting the granulation of the plastic pieces or waste and, on the other hand, with pounding knives mounted alternately with the said toothed granulation rollers, the axis of rotation of the said crushing rotors being positioned parallel to the axis of rotation of the shaft (2) and in a substantially horizontal plane, the said plane, which extends between the axes of rotation of the said rotors, being located below the axis of rotation of the shaft (2), and the axis of symmetry of the said plane extending through the axis of the shaft (2).

2. Device according to Claim 1, **characterized in that** each hook (1) of the shaft (2) is mounted so as to intersect with the crushing rotors in grooves provided for this purpose.

3. Device according to Claim 1, **characterized in that** the hooks (1) have cutting teeth on their contour.

4. Device according to Claim 1, **characterized in that** the shaft (2) does not pass completely through the tunnel (3).

5. Device according to Claim 1, **characterized in that** the hooks (1) have a cam shape.

6. Device according to Claim 1, **characterized in that** the shaft (2) and the hooks (1) are in one piece.

7. Device according to Claim 1, **characterized in that** the shaft (2) is a splined shaft.

8. Device according to Claim 1, **characterized in that** the spacers (3) between the hooks (1) are equipped with multiple teeth.

9. Device according to Claim 1, **characterized in that**, in a plane perpendicular to the axes of rotation of the shaft (2) and of the two crushing rollers, the projection of the path of the hooks (1) of the shaft (2) crosses the projection of the path of the members capable of effecting the granulation in the region of the two crushing rotors.

10. Device according to Claim 1, **characterized in that** the crushing rotors rotate in opposite directions of rotation.

11. Device according to Claim 1, **characterized in that** the shaft (2) and its load are controlled and managed by means of a programmable automatic control in relation to the load of the two crushing rotors.

12. Device according to Claim 1, **characterized in that** the rotation of the shaft (2) is synchronized with the rotation of the two crushing rotors.

## Patentansprüche

1. Zerkleinerungsvorrichtung mit Zwangszuführung von Kunststoffteilen oder Abtallen aller Größen, umfassend, innerhalb eines Schutzgehäuses, das mit der Zerkleinerungsmaschine über einen Zuführungstunnel (4) in Verbindung steht, eine Welle (2), die alternierend drehangetrieben wird, die mit einem oder mit mehreren radialen Haken (1) ausgestattet ist, die mittels Distanzstücken (3) mit Zwischenräumen angeordnet sind und dazu vorgesehen sind, die durch Schwerkraft in das Schutzgehäuse fallenden Teile oder Abfälle zu erfassen, damit sie zwangsweise herunter in eine Schneidekammer gelangen, **dadurch gekennzeichnet, dass** die Schneidekammer zwei Zerkleinerungsrotoren umfasst, welche einerseits mit Zahnwalzen zur Granulierung ausgestattet sind, welche in der Lage sind, die Granulierung der Kunststoffteile oder Abfälle sicherzustellen, und andererseits mit Brechmessern, welche im Wechsel mit den Zahnwalzen zur Granulierung angebracht sind, wobei die Drehachse der Zerkleinerungsrotoren parallel zu der Drehachse der Welle (2) und in einer im Wesentlichen horizontalen Ebene angeordnet ist, wobei die Ebene, welche sich zwischen den Drehachsen der Rotoren erstreckt, sich unter der Drehachse der Welle (2) befindet, und wobei die Symmetrieachse der Ebene durch die Achse der Welle (2) verläuft.

2. Vorrichtung nach Anspruch 1, **dadurch gekennzeichnet, dass** jeder Haken (1) der Welle (2) derart angebracht ist, dass er sich mit den Zerkleinerungsrotoren in zu diesem Zweck vorgesehenen Einkerbungen überschneidet.

3. Vorrichtung nach Anspruch 1, **dadurch gekennzeichnet, dass** die Haken (1) an ihrem Umfang Schneidezähne aufweisen.

4. Vorrichtung nach Anspruch 1, **dadurch gekennzeichnet, dass** die Welle (2) den Tunnel (4) nicht vollständig durchragt.

5. Vorrichtung nach Anspruch 1, **dadurch gekennzeichnet, dass** die Haken (1) eine Nockenform aufweisen .

6. Vorrichtung nach Anspruch 1, **dadurch gekennzeichnet, dass** die Welle (2) und die Haken (1) einstückig sind.

7. Vorrichtung nach Anspruch 1, **dadurch gekennzeichnet, dass** die Welle (2) aus einer Kerbzahnwelle besteht.

8. Vorrichtung nach Anspruch 1, **dadurch gekennzeichnet, dass** die Distanzstücke (3) zwischen den Haken (1) mit mehreren Zähnen versehen sind.

9. Vorrichtung nach Anspruch 1, **dadurch gekennzeichnet, dass** in einer Ebene senkrecht zu den Drehachsen der Welle (2) und der beiden Zerkleinerungsrotoren, die Projektion der Bahn der Haken (1) der Welle (2) sich mit der Projektion der Bahn von Elementen überschneidet, die in der Lage sind, die Granulierung im Bereich der beiden Zerkleinerungsrotoren sicherzustellen.

10. Vorrichtung nach Anspruch 1, **dadurch gekennzeichnet, dass** sich die Zerkleinerungsrotoren in entgegengesetzte Richtungen drehen.

11. Vorrichtung nach Anspruch 1, **dadurch gekennzeichnet, dass** die Welle (2) und ihre Last durch einen Automaten gesteuert und geregelt werden, der in Bezug auf die Last der beiden Zerkleinerungsrotoren programmierbar ist.

12. Vorrichtung nach Anspruch 1, **dadurch gekennzeichnet, dass** die Drehung der Welle (2) mit der Drehung der beiden Zerkleinerungsrotoren synchronisiert ist.
